Europäisches Patentamt

European Patent Office

Office européen des brevets

(11) Veröffentlichungsnummer: **0 229 215**
**A2**

## (12) EUROPÄISCHE PATENTANMELDUNG

(21) Anmeldenummer: **86108047.1**

(51) Int. Cl.⁴: **F16D 3/77**

(22) Anmeldetag: **12.06.86**

(30) Priorität: **16.01.86 DE 3601080**

(43) Veröffentlichungstag der Anmeldung:
**22.07.87 Patentblatt 87/30**

(84) Benannte Vertragsstaaten:
**DE FR GB IT**

(71) Anmelder: **Firma Carl Freudenberg**
**Höhnerweg 4**
**D-6940 Weinheim/Bergstrasse(DE)**

(72) Erfinder: **Barth, Thomas, Dr.**
**Alfred-Messel-Weg 38**
**D-6100 Darmstadt(DE)**

(74) Vertreter: **Weissenfeld-Richters, Helga, Dr.**
**Höhnerweg 2**
**D-6940 Weinheim/Bergstrasse(DE)**

(54) **Kupplung.**

(57) Eine Kupplung zur unverdrehbaren Verbindung von sich in einem radialen Abstand umschließenden Maschinenteilen (1,2), umfassend einen in dem durch den Abstand gebildeten Spalt angeordneten Kupplungskörper (3), der außen und/oder innen sich quer zur Rotationsachse erstreckende Mitnehmer aufweist. Die äußeren und/oder die inneren Mitnehmer sind an dem einen, radialen Ende von den in Umfangsrichtung elastisch nachgiebigen Federzungen angeordnet und der Kupplungskörper an dem anderen. Sie sind an sich quer zur Rotationsachse erstreckende Mitnehmerflächen des äußeren und des inneren Maschinenteiles anlegbar.

Fig. 1

EP 0 229 215 A2

# Kupplung

Die Erfindung betrifft eine Kupplung zur unverdrehbaren Verbindung von sich in einem radialen Abstand umschließenden Maschinenteilen, umfassend einen in dem durch den Abstand gebildeten Spalt angeordneten Kupplungskörper, der außen und innen sich quer zur Rotationsachse erstreckende Mitnehmer aufweist, die an sich quer zur Rotationsachse erstreckende Mitnehmerflächen des äußeren und des inneren Maschinenteiles anlegbar sind.

Eine Kupplung der vorgenannten Art gelangt in dem Drehschwingungsdämpfer nach dem deutschen Patent 321 098 zur Anwendung. Sowohl die Mitnehmer als auch die Mitnehmerflächen sind dabei den jeweils zugehörigen Maschinenteilen starr zugeordnet, wodurch sich bei einer gegenseitigen Berührung ein spontaner Kraftanstieg ergibt. Dieser kann zu einer Schädigung angeschlossener Maschinenteile führen, weshalb in dem Zwischenraum zwischen den Mitnehmern und den Mitnehmerflächen bei der vorbekannten Ausführung ein flüssiges Dämpfungsmedium zur Anwendung gelangt. Grundvoraussetzung hierfür ist indessen eine gegenseitige Abdichtung der durch die Kupplung verbundenen Maschinenteile. Die Ausführung ist dementsprechend aufwendig in der Herstellung und störanfällig im Betrieb.

Der Erfindung liegt die Aufgabe zugrunde, eine Kupplung der eingangs genannten Art derart weiter zu entwickeln, daß überlastungsbedingten Schäden an angeschlossenen Maschinenteilen weitgehend ausgeschlossen sind. Die Kupplung soll sich neben einem einfachen Aufbau insbesondere durch eine gute Betriebssicherheit auszeichnen.

Diese Aufgabe wird erfindungsgemäß durch eine Kupplung der eingangs genannten Art gelöst, die dadurch gekennzeichnet ist, daß die äußeren und/oder die inneren Mitnehmer an dem einen radialen Ende von in Umfangsrichtung elastisch nachgiebigen Federzungen angeordnet sind und der Kupplungskörper an dem anderen Ende der Federzungen. Die durch die Kupplung verbundenen Maschinenteile sind dadurch elastisch aneinander angeschlossen, wodurch spontane Überlastungen federnd aufgefangen werden und zu Schäden der angeschlossenen Maschinenteile nicht mehr führen können. Auf vorteilhafte Ausgestaltungen nehmen die Ansprüche 2 bis 7 Bezug.

Die spezielle Ausbildung der erfindungsgemäßen Kupplung hängt weitgehend von der erforderlichen Stückzahl und von der speziellen Baugröße ab. Mitnehmer, Federzungen und Kupplungskörper können unabhängig voneinander erzeugt und in einem anschließenden Montagevorgang vereint werden. Eine entsprechende Vorgehensweise gestattet eine anforderungsspezifische Auswahl besonders gut geeigneter Werkstoffe für jedes der benötigten Einzelteile sowie deren optimale Gestaltung. Sie bedingt indessen einen vergleichsweise großen Herstellaufwand, weshalb in vielen Anwendungsfällen einer Ausführung der Vorzug gegeben wird, bei der entweder die Mitnehmer und die Federzungen oder die Mitnehmer, die Federzungen und der Kupplungskörper einstückig ausgebildet sind.

Die Mitnehmer können in den Kupplungskörper eingreifend verlängert sein, wodurch sich konstruktiv die Möglichkeit ergibt, den Kupplungsköper mit den Mitnehmern zugeordneten Anschlagflächen zu versehen, die im unbelasteten Zustand der Kupplung einen Abstand von den Mitnehmern haben und die die belastungsbedingte Ausweichbewegung der Mitnehmer auf einen festen Wert begrenzen. Die vorgeschlagene Kupplung erhält hierdurch gute Notlaufeigenschaften, die in bestimmten Anwendungen unverzichtbar sind.

Nach einer anderen Ausgestaltung ist es vorgesehen, daß die Federzungen gegen die radiale Richtung der Federkupplung geneigt sind. Die Federrate der Federzungen wird hierdurch weicher, was vielfach erwünscht ist. Als besonders vorteilhaft hat es sich erwiesen, wenn die Federzungen bei einer entsprechenden Ausführung in Drehrichtung geneigt sind.

Die Federzungen, die Mitnehmer und die Kupplungskörper können eine übereinstimmende Erstreckung in axialer Richtung haben. Die Kupplung läßt sich bei einer solchen Ausführung besonders einfach erzeugen, beispielsweise durch Ausstanzen von die fertige Einheit bildenden Platinen aus einem flächigen Material ausreichend großer Elastizität. Als besonders geeignet hat sich die Verwendung von Stahlblech und gegebenenfalls von Federstahl erwiesen. Auch die Verwendung elastomerer Werkstoffe und gegebenenfalls von thermoplastischen Werkstoffen ist ohne weiteres möglich. In Fällen, in denen die bei dem Stanzvorgang einzuhaltenden Randbedingungen es nicht zulassen, eine ausreichend große Dicke der Kupplung in axialer Richtung zu erzielen, ist es auch möglich, eine größere Anzahl von Platinen zu erzeugen und anschließend in aufeinandergeschichteter Form in den Spalt zwischen den zu verbindenden Maschinenteilen einzufügen. Die einzelnen Platinen vermögen sich in diesem Falle in ihrer Wirkung gegenseitig zu ergänzen, wodurch es gelingt, auch große Drehmomente elastisch abzufangen. Eine axiale Verbindung der einzelnen Platinen ist dabei nicht von funktionsentscheidender Bedeutung, er leichtert indessen die Montage. Sie kann dadurch erzeugt werden, daß die einzelnen Platinen bereits vorausgehend vor der Montage untereinander verklebt, verlötet, verschraubt oder vernietet werden.

Der Gegenstand der vorliegenden Erfindung wird nachfolgend anhand der in der Anlage beigefügten Zeichnung weiter erläutert. Es zeigen:

Figur 1

Eine beispielhafte Ausführung der erfindungsgemäßen Kupplung in montiertem Zustand.

Figuren 2 und 3

Alternative Ausführungen des zentralen Kupplungselementes, bei denen aus Gründen der Anschaulichkeit auf eine Wiedergabe der hierdurch verbundenen, einander in radialer Richtung umschließenden Maschinenteile verzichtet worden ist.

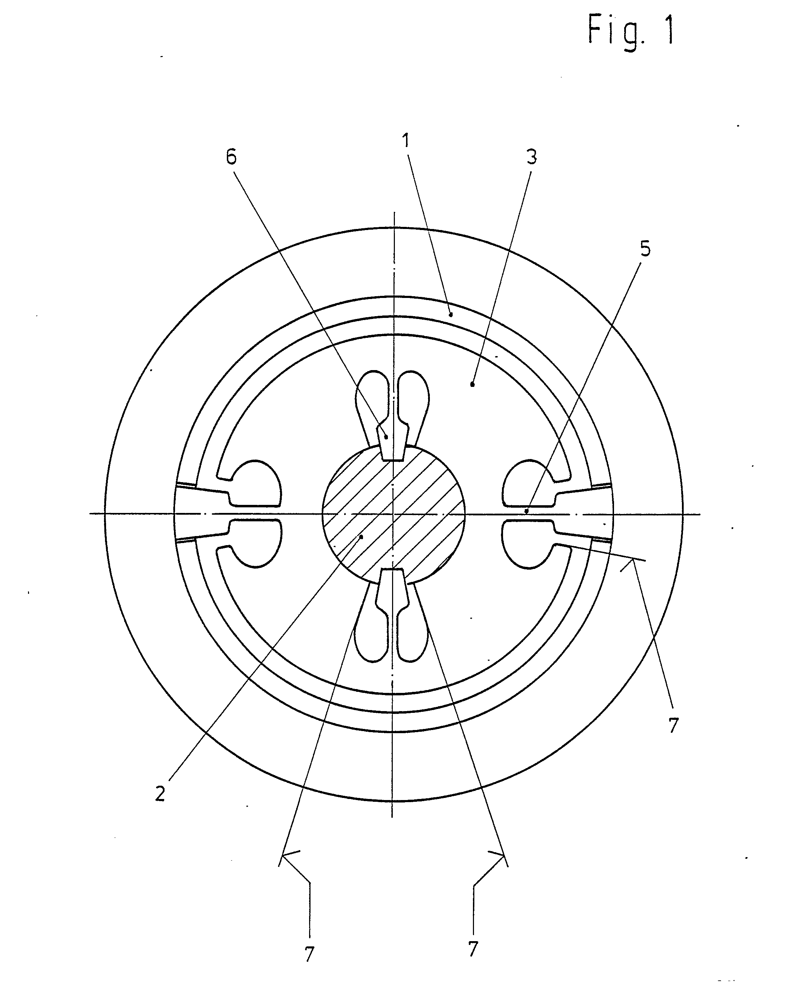

Die in Figur 1 gezeigte Kupplung dient der Übertragung eines Drehmomentes zwischen den einander in radialer Richtung umschließenden Maschinenteilen 1 und 2. Sie besteht aus einem einstückigen Stanzteil aus Stahlblech, welches den zentralen Kupplungskörper 3 umfaßt, die Federzungen 5 sowie die Mitnehmer 4,6. Letztere sind in den Kupplungskörper 3 radial eingreifend verlängert, und der Kupplungskörper ist mit Anschlagsflächen 7 versehen, die im unbelasteten Zustand der Kupplung in Umfangsrichtung einen Abstand von den Mitnehmern 4,6 haben. Der Kupplungskörper 3 ist im übrigen relativ verdrehbar auf dem inneren Maschinenteil 2 gelagert, wobei zur Verbesserung der Beweglichkeit in Umfangsrichtung es gegebenenfalls auch möglich ist, zwischen beiden eine zusätzlichen Gleitschale einzufügen. Die Mitnehmer sind stets gleichmäßig auf dem Umfang der Kupplung verteilt. Einer belastungsbedingten Ausweichbewegung der Kupplung in radialer Richtung wird hierdurch entgegengewirkt. Zum Betriebsverhalten ist folgendes auszuführen:

Das von dem innenliegenden Maschinenteil 2 auf das außenliegende Maschinenteil 1 zu übertragende Drehmoment nimmt seinen Weg über die in Serie geschalteten Blattfedern 5, welche einerseits die innenliegenden Mitnehmer 6 und andererseits die außenliegenden Mitnehmer 4 tragen. Der Kupplungskörper 3 ist sowohl im Hinblick auf das innenliegende Maschinenteil 2 als auch im Hinblick auf das außenliegende Maschinenteil 1 relativ verdrehbar. Die elastische Nachgiebigkeit beider Gruppen von in Serie geschalteten Federzungen 5 kommt hierdurch voll zum Tragen und gewährleistet die Erzielung einer vorgegebenen Federungscharakteristik. Drehschwingungen der durch die Kupplung verbundenen Maschinenteile lassen sich auf diese Weise zuverlässig isolieren.

Bei noch weiter zunehmender relativer Drehung der durch die Kupplung verbundenen Maschinenteile glangen die Mitnehmer 4,6 entweder gleichzeitig oder aufeinanderfolgend zur Anlage an den ihnen in einem Abstand in Umfangsrichtung vorgelagerten Anschlagsflächen des Kupplungskörpers 3. Auch dann ist durch die Ausbauchungselastizität der Federzungen 5 noch ein gewisses Federungsverhalten vorhanden, die insgesamt vorhandene Drehelastizität ist indessen durch eine starke Progressivität gekennzeichnet, was die Übertragung maximaler Drehmomente gestattet.

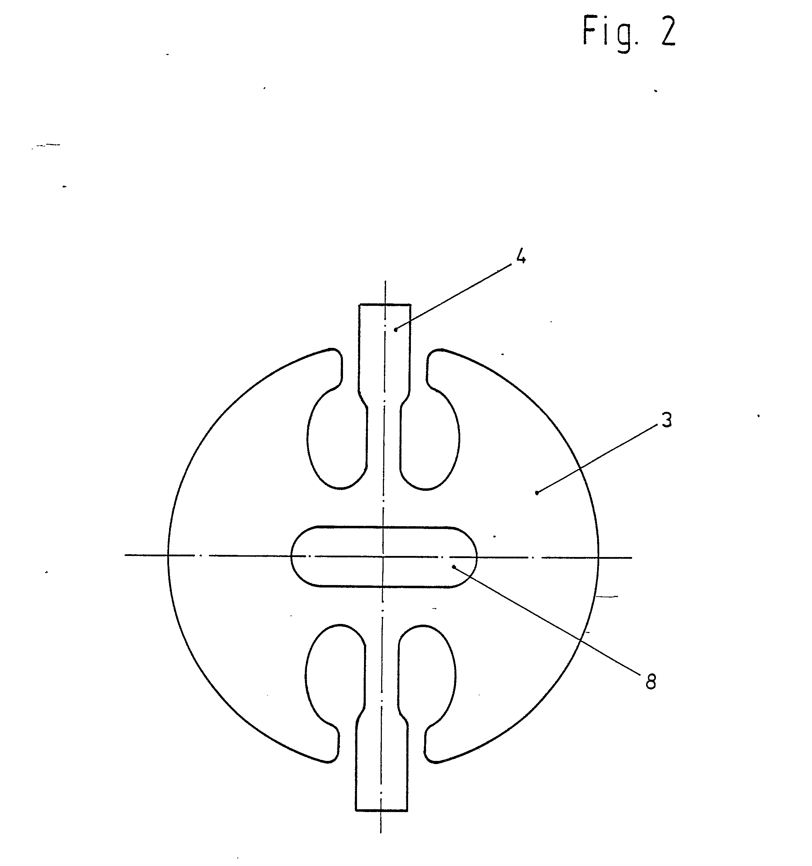

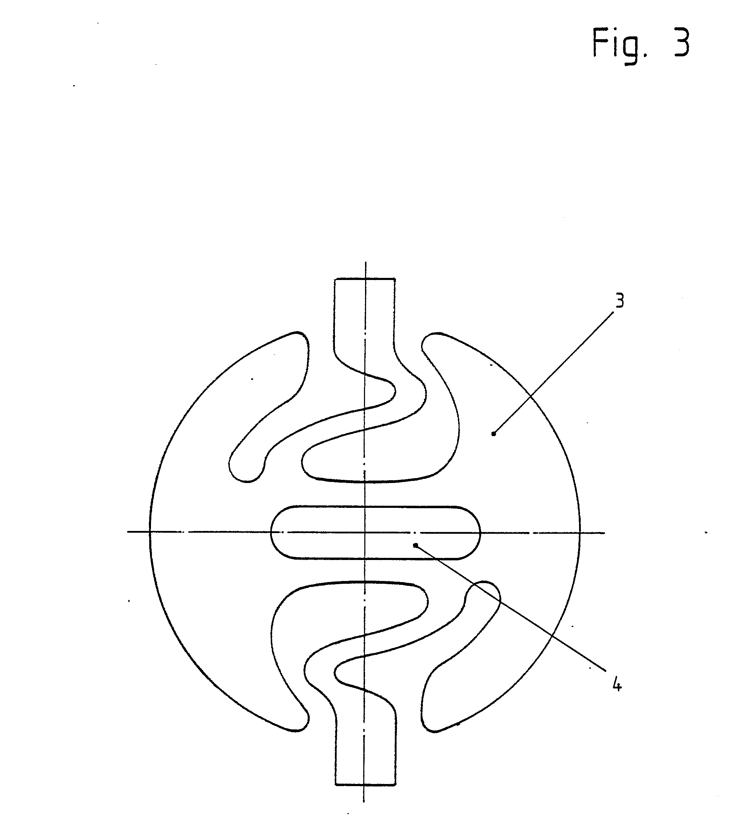

Die in den Figuren 2 und 3 gezeigten Ausführungen des zentralen Kupplungskörpers haben nach ihrem Einbau eine ähnliche Funktion wie der vorstehend beschriebene. In beiden Fällen sind indessen nur die äußeren Mitnehmer elastisch gelagert, während der innere Mitnehmer durch ein dem Kupplungskörper 3 starr zurgeordnetes Langloch 4 gebildet wird. Die Funktion im eingebauten Zustand entspricht jedoch im übrigen vollständig der vorstehend beschriebenen. Ein geringer Unterschied beider Ausführungen besteht darin, daß die Federzungen beider Ausführungen nach Figur 2 eine radiale Erstreckung ähnlich wie bei der Ausführung nach Figur 1 haben, während die Federzungen bei der Ausführung nach Figur 3 entgegen der Drehrichtung geneigt sind. Die sich in diesem Falle ergebende Federelastizität ist weicher als bei der Ausführung nach den Figuren 1 und 2. Die 90 Grad Zuordnung zwischen der Erstreckung des Langloches 8 und den äußeren Mitnehmern 4 gestattet den Ausgleich einer radialen Verlagerung der durch die Kupplung verbundenen Maschinenteile, wenn das Spiel zwischen diesen und dem Langloch 8 einerseits bzw. den Mitnehmern 4 andererseits ausreichend groß bemessen ist. Bei den meisten praktischen Ausführungen läßt sich diese Bedingung leicht erfüllen. Die Anwendung der erfindungsgemäß vorgeschlagenen Kupplung ist dadurch besonders unkompliziert und einfach und durch eine hochgradige Betriebssicherheit gekennzeichnet.

**Ansprüche**

1. Kupplung zur unverdrehbaren Verbindung von sich in einem radialen Abstand umschließenden Maschinenteilen, umfassend einem in dem durch den Abstand gebildeten Spalt angeordneten Kupplungskörper, der außen und innen sich quer zur Rotationsachse erstreckenden Mitnehmer aufweist, die an sich quer zur Rotationsachse erstreckende Mitnehmerflächen des äußeren und des inneren Maschinenteiles anlegbar sind, dadurch gekennzeichnet, daß die äußeren Mitnehmer (4) und/oder die inneren Mitnehmer (6) an dem radialen Ende von in Umfangsrichtung elastisch nachgiebigen Federzungen (5) angeordnet sind und der Kupplungskörper (3) an dem anderen.

2. Kupplung nach Anspruch 1, dadurch gekennzeichnet, daß die Mitnehmer (4,6) und die Federzugen (5) ein stückig ausgebildet sind.

3. Kupplung nach Anspruch 1 bis 2, dadurch gekennzeichnet, daß die Mitnehmer (4,6) die Federzungen (5) und der Kupplungskörper (3) einstückig ausgebildet sind.

4. Kupplung nach Anspruch 1 bis 3, dadurch gekennzeichnet, daß die Mitnehmer (4,6) in den Kupplungskörper (3) eingreifend verlängert sind und daß der Kupplungskörper (3) den Mitnehmern (4,6) zugeordnete Anschlagflächen (7) aufweist, die in unbelastetem Zustand der Kupplung einen Abstand von den Mitnehmern (4,6) haben und die die belastungsbedingte Ausweichbewegung der Mitnehmer (4,6) auf einen festen Wert begrenzen.

5. Kupplung nach Anspruch 1 bis 4, dadurch gekennzeichnet, daß die Federzungen (5) gegen die Radialrichtung der Federkupplung geneigt sind.

6. Kupplung nach Anspruch 5, dadurch gekennzeichnet, daß die Federzungen (5) in Drehrichtung geneigt sind.

7. Kupplung nach Anspruch 1 bis 6, dadurch gekennzeichnet, daß die Federzungen (5), die Mitnehmer (4,6) und der Kupplungskörper (3) eine übereinstimmende Erstreckung in axialer Richtung haben.

Fig. 1

0 229 215

Fig. 2

Fig. 3